(19)

Europäisches
Patentamt
European
Patent Office
Office européen
des brevets

(11) **EP 1 825 562 B1**

(12) **EUROPEAN PATENT SPECIFICATION**

(45) Date of publication and mention
of the grant of the patent:
**14.05.2008 Bulletin 2008/20**

(51) Int Cl.:
***H01Q 3/44*** (2006.01)

(21) Application number: **04809029.4**

(86) International application number:
**PCT/SE2004/001822**

(22) Date of filing: **08.12.2004**

(87) International publication number:
**WO 2006/062446 (15.06.2006 Gazette 2006/24)**

(54) **A FERROELECTRIC LENS**

FERROELEKTRISCHE LINSE

LENTILLE FERROELECTRIQUE

(84) Designated Contracting States:
**AT BE BG CH CY CZ DE DK EE ES FI FR GB GR
HU IE IS IT LI LT LU MC NL PL PT RO SE SI SK TR**

(43) Date of publication of application:
**29.08.2007 Bulletin 2007/35**

(73) Proprietor: **Telefonaktiebolaget LM Ericsson
(publ)
164 83 Stockholm (SE)**

(72) Inventors:
• **TAGEMAN, Ola
S-412 64 Göteborg (SE)**
• **SPARTAK, Gevorgian
S-411 11 Göteborg (SE)**
• **DELENIV, Anatoli
S-414 82 Göteborg (SE)**

• **FIHOL, Pierre
F-33600 Pessac (FR)**
• **CHERMAN, Vladimir
CH-1022 Chavannes pres Renens (CH)**

(74) Representative: **Kühn, Friedrich Heinrich
Ericsson AB
Patent Unit LTE
Torshamnsgatan 23
164 80 Stockholm (SE)**

(56) References cited:
**WO-A-01/39324          WO-A1-00/24080
WO-A1-93/10571          WO-A1-97/22158**

• **RAO B.L. ET AL.: 'Voltage-controlled ferroelectric
lens phased arrays.' IEEE TRANSACTIONS ON
ANTENNAS AND PROPAGATION. vol. 47, no. 3,
03 March 1999, pages 458 - 468, XP000830205**

**Description**

TECHNICAL FIELD

The present invention relates to a lens for steering the exit direction of an electromagnetic wave which is incident upon the lens, said lens comprising a main body of a ferroelectric material with at least a first main surface and a first transformer which is adjacent to said first main surface of said ferroelectric body. The lens additionally comprises means for creating a first DC-field in a first direction in the main body, and the incident electromagnetic wave will enter and exit the lens through the transformer.

BACKGROUND ART

Ferroelectric materials have a dielectric constant which can be altered if a DC-field is induced in the material. This property has been used to manufacture lenses of ferroelectric materials for electrical steering of electromagnetic beams, such as an antenna beam, the beam being the "output" from the lens of an electromagnetic field which has been incident upon the lens.

A lens which is made from a ferroelectric materials and which is used for electrically steering the exit direction of a beam which is incident upon the lens and exits the lens is known from IEEE Transactions on Antennas and Propagation, pp 458-468, volume 47, no 3 1999, "Voltage-Controlled Ferroelectric Lens Phased Arrays".

A drawback of the device discussed in this article is the complexity of the design and the price. The device uses a multitude of traditional waveguides filled with ferroelectric materials and input/output matching sections which would increase the cost of the device.

Another ferroelectric beam-steering lens is known from 33$^{rd}$ EuMC WS6 proceedings, pp 79-82. Drawbacks of the device disclosed in this paper seem to be a very high charging time constant, as well as quite a high voltage (in the order of magnitude of 20kV) needed to drive the lens. Additionally, the fabrication of a large area ferroelectric plates (lens) as disclosed in this paper is complicated - it is hard to fabricate the large size (>5x5cm$^2$) plates of the design with acceptable densification and uniformity.

Document WO 01/39324 A1 discloses a lens for steering the direction of an electromagnetic wave comprising a plate of ferroelectric material. Two independent variable voltage sources in combination with highly resistive films applied respectively to a first and a second perpendicular sides of the plate provide beam steering in the X-Z plane and in the Y-Z plane.

SUMMARY OF THE INVENTION

There is thus a need for a ferroelectric lens for steering the output direction of an incident electromagnetic beam which is less expensive and less complex to manufacture than those known at present. In addition, such a new lens should also need lower driving voltages than lenses which are known at present.

These needs are addressed by the present invention in that it discloses a lens for steering the exit direction of an electromagnetic wave which is incident upon the lens, the lens comprising a main body of a ferroelectric material with at least a first main surface, also comprising a first transformer which is adjacent to said first main surface of said ferroelectric body. The lens is defined in claim 1.

BRIEF DESCRIPTION OF THE DRAWINGS

The invention will be described in more detail with reference to the appended drawings, in which

Fig 1 shows a diagram of the principles of a lens according to the invention, and
Fig 2 shows a lens in cross-section from the side, and
Fig 3 shows a cross-section of a main surface of a lens, and
Fig 4 shows a component in the lens, and
Fig 5 shows a cross-section of a main surface of a first embodiment of a lens of the invention, and
Fig 6 shows a component in the first embodiment of a lens of the invention, and
Fig 7 shows a side cross-section of a second embodiment of the invention, and
Figs 8a and 8b show a variation of the component of fig 6, and
Figs 9a and 9b show versions of the invention, and
Fig 10 shows a more detailed embodiment of the invention, and
Figs 11 a and 11 b show alternative embodiments of the lens of the invention, and
Figs 12 and 13 show versions of another alternative embodiment of a lens according to the invention.

EMBODIMENTS

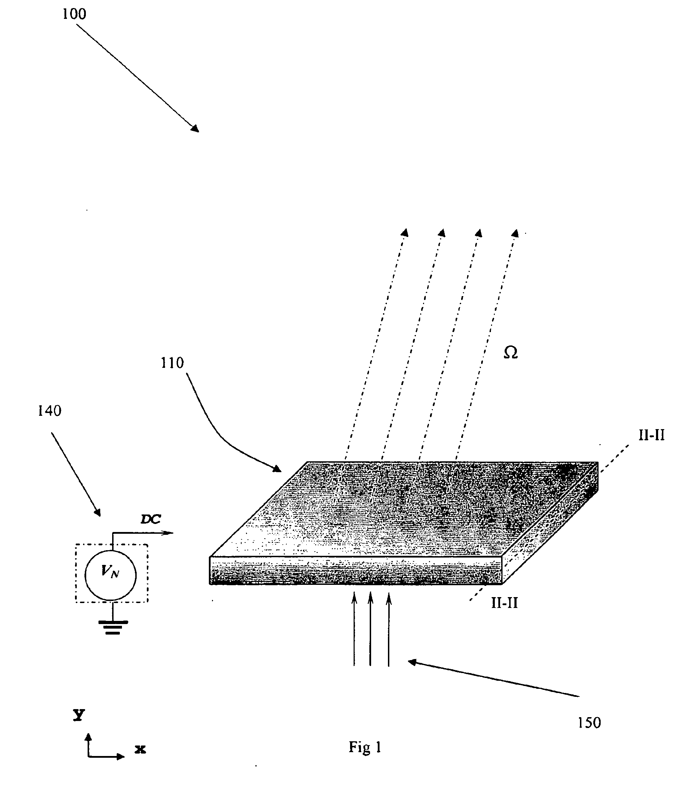

Fig 1 illustrates some of the basic principles of a lens 100 according to the invention. As shown in the drawing, the invention comprises a lens 100 which in turn comprises a body 110 of a ferroelectric material. One property of a ferroelectric material is that the dielectric constant, $\varepsilon$, of the material can be changed by subjecting the material to a DC-field.

As illustrated schematically in fig 1, the lens of the invention comprises means 140 for creating a DC-field to be applied to the body 110 of ferroelectric material. If the DC-field which is created over or in the ferroelectric body is not constant, but is instead a gradient in at least one direction, the dielectric constant, $\varepsilon$, of the ferroelectric body will vary according to the gradient of the DC-field.

An application of the ability to change the dielectric constant of the body of ferroelectric material is shown in fig 1: a plane electromagnetic wave 150 is incident upon a first main surface of the body 110, the incident direction being normal to the first main surface. The wave enters the body 110 through the first main surface, and exits through a second main surface of the body.

According to the invention, the DC-means 140 are used to create a DC-field in a first direction in the body 110, the direction shown in fig 1 being indicated by an arrow and being parallel to one edge of the body which is shown as having an essentially square or rectangular shape. The direction of the DC-field created by the DC-means is in the direction denoted as "x" in a coordinate system shown in fig 1, the x-axis coinciding with said edge of the essentially square body. As mentioned, the DC-field created in the lens 100 of the invention is a gradient, thus in this case a DC-gradient is created along the x-direction of the lens.

A result of the gradient DC-field is also shown in fig 1: the plane electromagnetic wave 150 which enters the ferroelectric body 110 through the first main surface of the ferroelectric body 110 at an incident angle which is normal to the first main surface exits the lens through the second main surface of the body at a direction which deviates an angle $\Omega$ from the normal.

The fact that the exit direction of an incident wave can be changed by means of imposing a gradient DC-field upon the ferroelectric body means that a lens according to the invention can be used as a beam steering device. The device 100 shown in fig 1 only serves to illustrate the basic principle behind the invention, the description will now show the invention in closer detail.

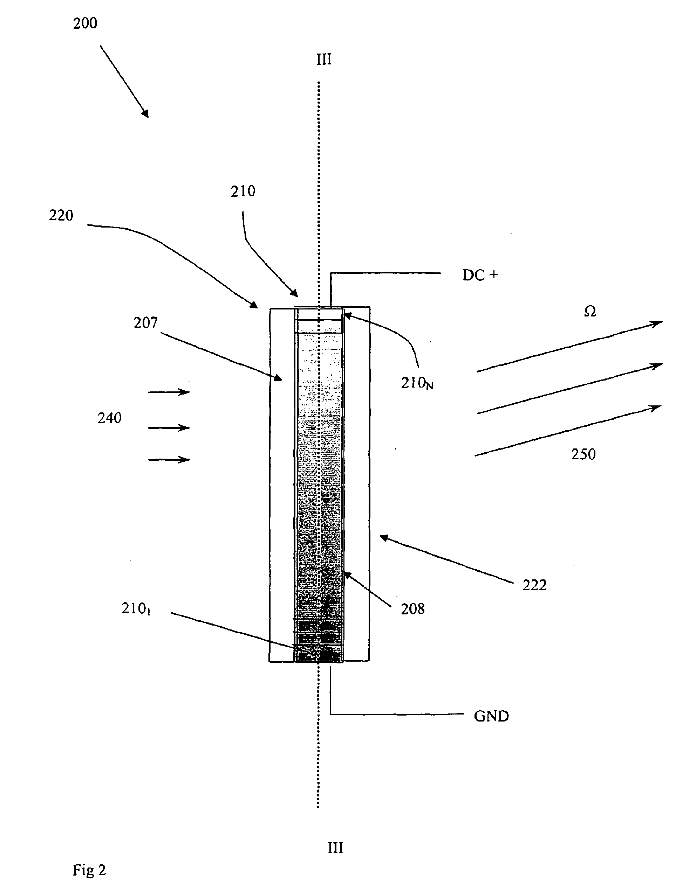

Fig 2 shows a lens 200 in a cross-section along the dotted line II-II in fig 1: as with the lens 100 of fig 1, the lens 200 in fig 2 comprises a body 210 of a ferroelectric material, which will be described in more detail later. The body 210 also exhibits a first main surface 207.

In addition, which was not shown in fig 1, the lens 200 of fig 2 comprises a matching transformer 220 which is arranged adjacent to the first main surface 207 of the ferroelectric body 210. The function of the transformer 220 is to facilitate the entry and exit of an electromagnetic wave between the lens and the ambient atmosphere, which will be described in more detail later.

Thus, there should suitably also be a transformer where a wave will exit the lens. This can be accomplished by letting the transformer 220 surround the lens at both the intended entry and exit surfaces for the wave, i.e. by letting the first transformer be in one solid contiguous piece, or, as shown in fig 2, by letting the lens 200 of the invention comprise a second transformer 222 in addition to the first transformer 220, the second transformer being arranged adjacent to the intended exit surface of the electromagnetic wave, i.e. adjacent to a second main surface 208 of the body 210.

As shown in fig 2, the ferroelectric body 210 is suitably shaped as a rectangular box, so that the first 207 and second 208 main surfaces of the body 210 become two opposing main surfaces of the box.

Also, as shown in fig 2, the ferroelectric body 210 comprises a plurality of discrete slabs $210_1$-$210_N$. As shown in fig 2, the slabs $210_1$-$210_N$ are stacked adjacent to each other, in this example on top of each other, to form the ferroelectric body 210.

Thus, a plane electromagnetic wave 240 which is incident upon the lens 200 in a direction normal to the first main surface 207 of the body of ferroelectric material 210 will enter the lens through the first transformer 220 and the first main surface 207 and exit the body 210 through the second main surface 208 and the second transformer 222.

As illustrated in fig 2, and as explained previously, the direction of the exiting wave 250 can be controlled by means of introducing an electrical field in the body 210 so that an electrical gradient is formed, suitably having a maximum at an "end slab" $210_1$ or $210_N$ and a corresponding minimum at another "end slab".

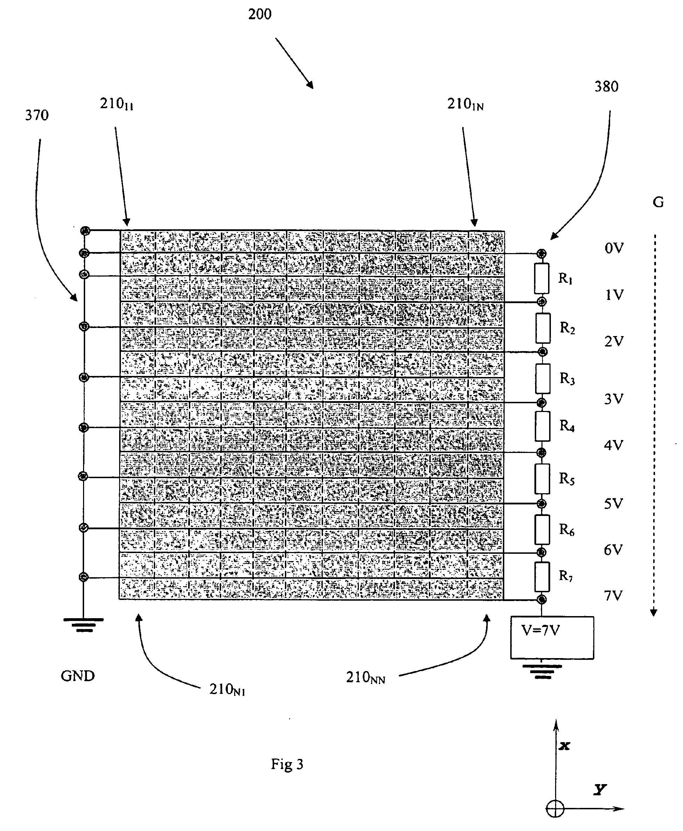

Accordingly, the lens comprises means (DC+, GND) for introducing a first DC-field in a first direction in the main body. This will now be described in more detail with reference to fig 3.

Fig 3 shows the lens 200 from fig 2 in a cross-sectional front view along the dashed line III-III shown in fig 2. Fig 3 clearly shows the composition of the body 210, with a plurality of slabs, the slabs in this particular case being elongated box-like structures arranged as a matrix in rows and columns, so that each slab, as shown on the drawing, can be seen as an element in a two-dimensional matrix, $210_{11}$-$210_{NN}$.

The matrix is of course only one suitable form for the ferroelectric body 210, as is the elongated box-like shape of the individual slabs, many other forms of slabs and ferroelectric bodies can be realized within the scope of the invention. For example, in this particular embodiment, each row, i.e. elements $210_{11}$-$210_{1N}$ etc. can be one contiguous slab, so that the body 210 instead comprises a plurality of "boards" arranged on top of each other.

As mentioned previously, the lens also comprises means for creating a DC-field gradient in the lens. These means can be seen more clearly in fig 3, and in this example comprise a first set of "ground lines" 370 and a second set of DC-lines 380.

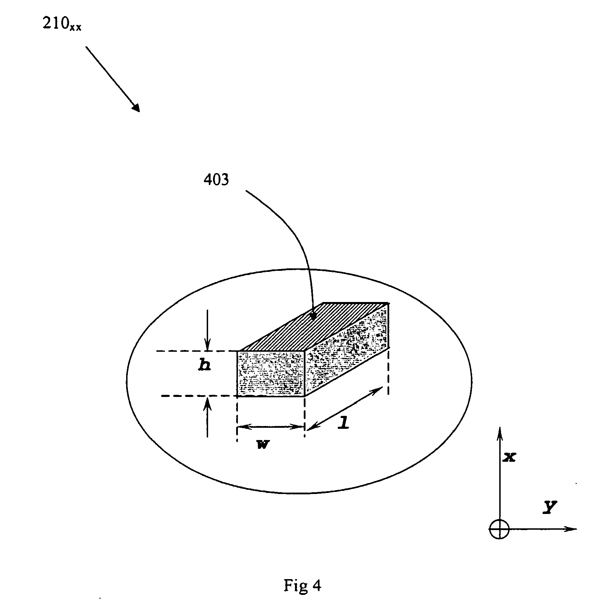

As can be seen, the ground lines 370 are connected to a common ground point GND, and the DC-lines are connected to a DC-power supply "V". Before the means for creating the DC-field are described further, the individual elements, the "slabs" of the ferroelectric body 210 will now be described in more detail, with the aid of fig 4.

Fig 4 shows one of the slabs $210_{XX}$ of the matrix shown in fig 3. As can be seen from fig 4, the slab is rectangular and box-like, with a width $w$, a height $h$ and a length $l$. It is the two surfaces (front and rear "face" of the slab) defined by the width w and the height $h$ which form the first and second main surfaces 207, 208, of the body 210 of ferroelectric material.

The slabs in the matrix, as shown in fig 3, comprise a first and a second electrode of an electrically conducting material, such as, for example, Ag, Au, Pt or Pd. With the slabs having the shape shown in fig 4, the electrodes are suitably arranged on a top 403 and bottom surface of the slab. Thus, with the coordinate system shown at the bottom right of fig 4, two slabs which are arranged adjacent to each other in the x-direction will have mechanical and galvanic contact between the top electrode of one slab and the bottom electrode of the other slab. Due to the electrodes, each individual slab $210_{11}$-$210_{NN}$ can be seen as an elementary TEM-waveguide.

Returning now to fig 3 and the means for creating a DC-field, as mentioned above, these means comprise a first set of ground lines 370 and a second set of DC-lines 380.

Let's consider the slabs in the "rightmost" column, i.e. slabs $210_{1N}$, $210_{2N}$...$210_{NN}$. Slab $210_{1N}$ is arranged so that its bottom electrode is in contact with the top electrode of the slab immediately below it, i.e. slab $210_{2N}$. This is the principle adhered to with all of the slabs (except, for natural reasons, the uppermost and lowermost of the slabs) in any specific column: the bottom electrode of each slab is in contact with the top electrode of the slab immediately below it.

A number of connection points are thus created at the intersection between two slabs, where each connection point comprises the bottom electrode of one slab and the top electrode of the next slab immediately below. If the two electrodes do not extend to the sides of the slabs so that the connection points can not be accessed at the sides, an extra conductor can be introduced to facilitate electrical access to the meeting points of the two electrodes.

Thus, at the intersections or connection points between two slabs, it will be possible to establish a potential by connecting the connecting point to a DC-feed. This is what is done in the embodiment of fig 3: there is a first potential line 370 connected to ground, and a second potential line 380 connected to a DC-supply. By means of these two potential lines, the gradient field in the ferroelectric body 210 is created, in the following manner: the second potential line 380 is connected to a DC-supply, and comprises a number of voltage dividers, in this case resistors.

Fig 3 shows seven resistors, so let's assume, for the sake of simplicity, that $V_{DC}$=7 Volts. Needless to say, the number of resistors and the amplitude of the DC-voltage are merely examples, the number of resistors and the DC-amplitude can be varied as necessary, according to the application.

Using $V_{DC}$=7V, there will then be a voltage of 1 V across each resistor, with the voltage between any one resistor and ground being shown next to the resistors, said voltage to ground varying as a gradient from 0 to 7 volts.

With the exception of the first slab, i.e. slab $210_{1N}$, the electrode on one side (top/bottom) of each slab will be connected to a point in the ground line 370, and the electrode on the other side (bottom/top) of the same slab will be connected to a point in the second potential line 380.

Thus, one of the electrodes in each slab will be connected to ground, and the other electrode will be connected to the potential line supplied by the DC-feed.

In order to create the desired DC-gradient over the slabs, starting from the slab which will be the lowest potential in the DC-gradient, and going in the direction of the desired gradient, each slab is connected to a point in the second potential line 380 which has a higher potential than the point in the next slab which is connected to the second potential line 380.

In order to facilitate the understanding of this, fig 3 shows the voltage on each side of each resistor in the second potential line 380.

In order to further facilitate the understanding of this principle, the table below shows, for the slabs in the rightmost column, column N, the potential between the point in the slab which is connected to the DC-line and ground. Since there are 16 rows shown in the drawing, which is of course merely an example, the slab at the bottom right hand corner will here be denoted $210_{16,N}$.

| Slab | Voltage |
|---|---|
| $210_{1,N}$ | 0 |
| $210_{2,N}$ | 0 |
| $210_{3,N}$ | 1 |
| $210_{4,N}$ | 1 |
| $210_{5,N}$ | 2 |
| $210_{6,N}$ | 2 |
| $210_{7,N}$ | 3 |
| $210_{8,N}$ | 3 |
| $210_{9,N}$ | 4 |
| $210_{10,N}$ | 4 |
| $210_{11,N}$ | 5 |
| $210_{12,N}$ | 5 |
| $210_{13,N}$ | 6 |
| $210_{14,N}$ | 6 |
| $210_{15,N}$ | 7 |
| $210_{16,N}$ | 7 |

Thus, there is a DC-gradient created over the body 210 of ferroelectric material, the gradient being indicated by the arrow G in fig 3. The DC-gradient in turn creates a gradient in the dielectric constant $\varepsilon$ in the body, the $\varepsilon$ decreasing in the same direction as the DC-voltage increases, i.e. the higher DC-field biasing, the lower the $\varepsilon$ of the ferroelectric material.

Since it is possible to control the gradient by means of controlling the potential line 380, it will now be realized that this control can also be used to control the output direction $\Omega$ of the exiting electromagnetic wave 250 which was shown and described in connection with fig 2. Thus, by using the DC-means shown in figs 2 and 3 and described above, it will be possible to control the exit direction of the electromagnetic wave in the "x"-direction, with reference to the coordinate system shown in fig 3.

Another important principle will also have emerged from the description of the DC-means or biasing means: the DC-field which is created in a lens of the invention will be essentially parallel to the E-field of the incident electromagnetic wave shown in fig 2. This allows for greater tuning precision than in previously known designs, where the two E-fields (biasing field and incident wave field) have often been more or less orthogonal to each other.

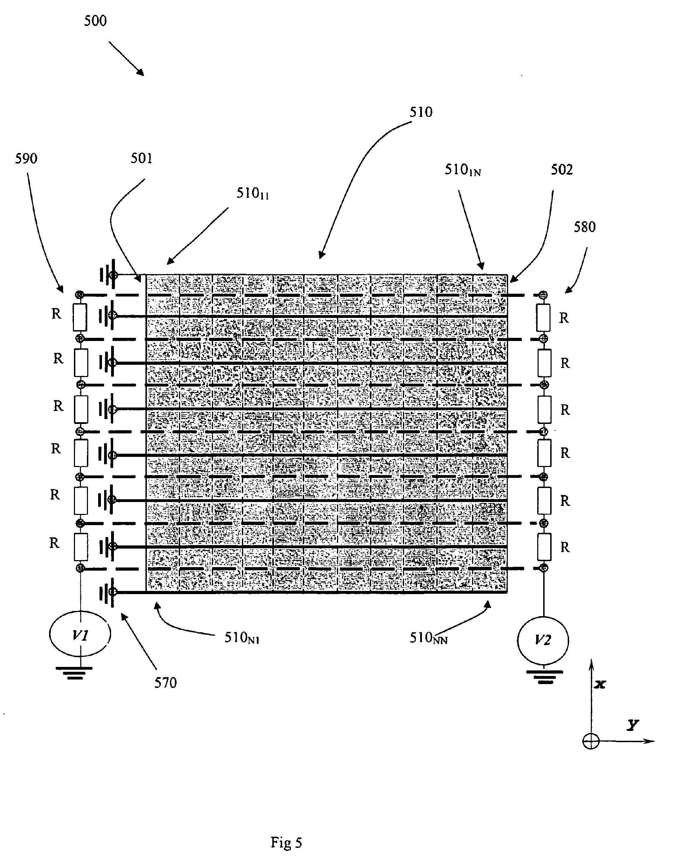

Fig 5 shows a first embodiment 500 of the invention, by means of which the direction of the exiting electromagnetic beam can be controlled in both the x- and the y-direction, with renewed reference to the coordinate system shown in fig 3 and also in fig 5.

As with the previous examples, the embodiment 500 is based on a body of ferroelectric material 510. The lens 500 comprises one or several matching transformers at the main surfaces of the body, which is in similarity to the embodiment shown and explained in conjunction with figs 2-4, for which reason the transformers will not be described again here.

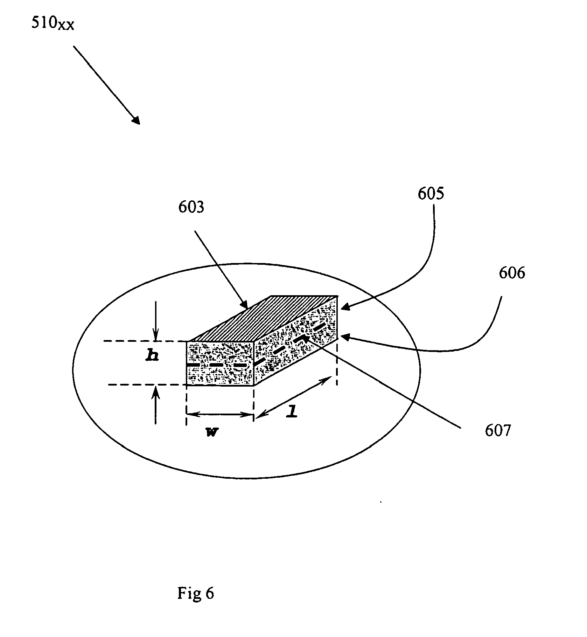

The ferroelectric body 510 is also comprised of a plurality of slabs, $510_{11}$-$510_{NN}$, which in the drawing are shown as rectangular box-like structures arranged as a matrix with N rows and N columns. One of the slabs used in the embodiment 500 is shown in more detail in fig 6.

As with the slabs of the previous example, the slab $510_{XX}$ shown in fig 6 comprises a first and a second electrode, in the example arranged on a top 603 and a bottom surface of the slab. In further similarity to the slabs of fig 3 and 4, the slab $510_{XX}$ is rectangular and box-like, with a width $w$, a height $h$ and a length $l$. The two surfaces (the front and rear "face" of the slab) defined by the width $w$ and the height $h$ of the slab form first and second main surfaces 507, 508, of the body 510 of ferroelectric material.

However, as opposed to the previously shown slabs, the slab or TEM-waveguide $510_{XX}$ of the embodiment 500 has a two-layered structure, shown in fig 6, and composed as follows:

A first layer 605 of ferroelectric material is arranged on top of a second layer 606 of a ferroelectric material, suitably but not necessarily the same kind of ferroelectric material. Between these two layers 605, 606, there is arranged a layer of conducting material, which is suitably a material with a high resistivity, for reasons which will become clear later on in this description. As with the slabs shown earlier, the slab $510_{XX}$ can be seen as an elementary TEM-waveguide, and comprises a first and a second electrode of a conducting material with low resistivity, the first electrode 603 in this example being arranged on a "top" surface of the slab, and the second electrode 604 being arranged on the opposing bottom surface of the slab.

Thus, as shown in fig 5, in addition to the connection points of the arrangement shown in figs 2 and 3, additional or intermediate connection points are created in between the connection points shown previously, the additional connection points being access points to the layer of high resistivity, which can be seen as a third electrode in each slab.

As show in fig 5, in addition to the ground means 570 and first means for creating a DC-gradient 580, the lens 500 comprises second means 590 for creating a DC-gradient in a second direction in the ferroelectric body 510. Suitably, as will be explained below, the direction of the second gradient is perpendicular to the direction of the first gradient created by the first means 580, but other directions are possible within the scope of the invention.

As shown in fig 5, the second means 590 for creating a gradient also comprises a DC-supply ($V_1$) connected to a number of voltage dividers, in this case resistors.

As can be seen in fig 5, the third electrodes 607 are connected to both of the voltage supplies $V_1$, $V_2$, the connections being made to one voltage supply $V_1$ on a first main edge 501 of the body 510, and to the other voltage supply $V_2$ on an opposing second main edge 502 of the body 510. In addition, the connections are made so that a first (in the "x"-direction) of the third electrodes 607 is connected to a first side of a first voltage divider in each of the two networks 580, 590, and the next (in the "x"-direction) of the third electrodes is connected to the second side of the first voltage divider, as well as being connected to a first side of the second voltage divider.

The next after that of the third electrodes is then connected to the second side of the second voltage divider. In short, the principle which will now have been realized is that one voltage divider from each of the DC-supplies, $V_1$, $V_2$, will connect two adjacent third electrodes.

The connection points which are created at the intersections between the slabs of the body 510 are also utilized in this embodiment, in this case by being connected to a grounding network or ground lines 570.

Using the principle described in connection to figs 2-4, it will be realized that a DC-gradient can be created in the x-direction in the embodiment 500 as well, using either the voltage supply $V_2$ or $V_1$. Also, the reason for using a material with a high resistivity in the third electrode will also be realized: if there is a voltage difference between the DC-supplies $V_1$ and $V_2$ and the connection between them is not an ideal conductor, there will be an essentially linear voltage drop in the y-direction, by means of which a DC-gradient is created in that direction as well, by means of a voltage difference $V_1$-$V_2$.

Thus, by means of controlling the two voltage supplies $V_1$ and $V_2$, the dielectrical constant $\varepsilon$ of the board can be made to vary as a gradient in both the x- and the y-directions, by means of which the exit direction of the incident electromagnetic wave can be controlled in both directions, which was the desired result of the embodiment 500.

It should be mentioned here that in the ferroelectric body 510, in similarity to the ferroelectric body 210, the elements of one column, e.g. elements $510_{11}$-$510_{1N}$, can be one contiguous slab instead of discrete elements, i.e. the body 510 can consist of "boards" stacked on top of each, and other.

The embodiment shown above and in the appended drawings are merely examples to facilitate the understanding of the invention, it will be realized that many variations are possible, both when it comes to the structure of the TEM-waveguides ("slabs") and when it comes to the means for creating the DC-gradient field.

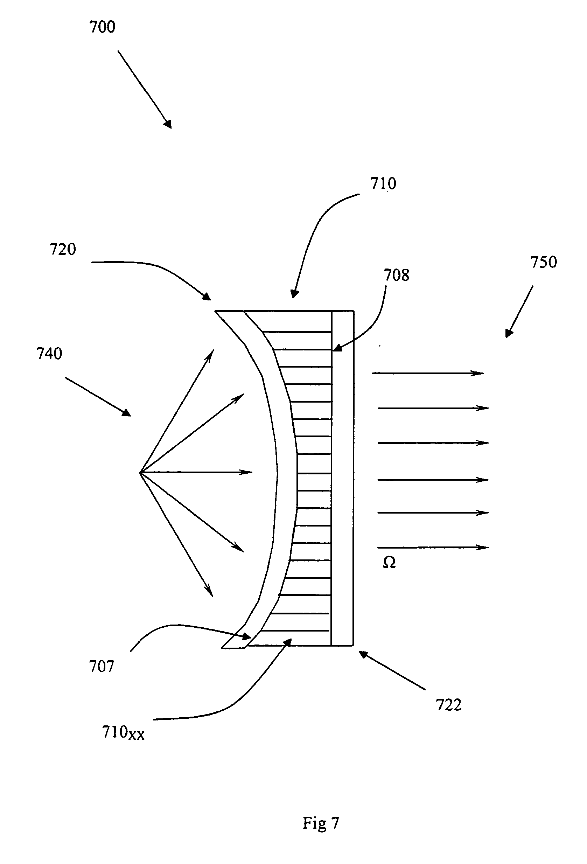

One example of an alternative embodiment 700 is shown in fig 7: the ferroelectric lens 700 comprises a ferroelectric body 710, with a matching transformer 720, 722, adjacent to each of two main surfaces 707, 708, of the ferroelectric body 710.

However, as an alternative, the lens 700 has a concave first main surface 707 and a plane second main surface 708, with the respective matching transformers 720, 722, having corresponding shapes. This shape of the components of the lens make it possible to, for example, shape the beam form and/or beam width of the output beam.

Some examples of materials and dimensions for a lens according to the invention will also be given. It should be pointed out that although these materials and examples are suitable for a lens according to the invention, these are examples only, and should not be seen as restricting the scope of the invention.

As an example of a suitable material for the ferroelectric slabs of the ferroelectric body, mention can be made of $Ba_xSr_{1-x}TiO_3$, where $0 \leq x \leq 1$.

When it comes to choosing materials for the matching transformers, any material with a suitable dielectric constant may be chosen, i.e. the following formula should be adhered to:

$$\varepsilon_{transformer} = \sqrt{\varepsilon_{ferr.lens}} \qquad (1)$$

Regarding the dimensions, in other words w, h, l, of the "slabs" or TEM-waveguides in the body of ferroelectric material, the following can be said: the width w may be determined, for example, by ease of fabrication. In other words, the smaller the width w of the waveguides is, the higher the yield will be, if the waveguides are produced as parts of a larger block.

As for the height h, or that dimension which will be the height when the waveguides are arranged in the lens as shown above, the height h should be less than the half of the intended operating wavelength of the lens. Hence, we can talk about a specific height only in connection with a specific frequency. If, for example, the lens is to be designed to work at 10GHz using ferroelectric with ε=200m we then have:

$$h < \frac{3 \times 10^8}{2 \times 10^{10} \times \sqrt{200}} \approx 1.06\,mm \ .$$

Thus, the general formula for the height h of the slabs is:

$$h < \frac{c}{2 * f \times \sqrt{\varepsilon_{ferr}}} \qquad (2)$$

where c is the speed of light, f is the intended operating frequency (centre frequency) of the lens, and $\varepsilon_{ferr}$ is the dielectric constant of the ferroelectric material used.

An example of a suitable height h of a slab is in the are of 0.5-1 mm. This is merely an example of a suitable value, and is in no way restrictive for the invention.

With suitable ferroelectric materials, a typical value of the control voltage would be 10V/μm in the direction in which the voltage is applied. Thus, in the case of a slab with $h$ = 1 mm, the control voltage would be 1 kV.

The length l of the slabs is defined by, among other things, the required range of the scanning angle of the lens. A typical value for l would be in the range of approximately 10-20mm.

Regarding the matching transformers, their depth, i.e. the dimension which is perpendicular to the main surfaces of the body of ferroelectric material, the depth of the transformers should be a quarter-wavelength of the intended operating frequency. For the frequency 10GHz and dielectric constant of ferroelectric ε=200, and using equation (1) above for the dielectric constant of the transformer, we would thus have a transformer depth $d_{TRANS}$ :

$$d_{TRANS} = \frac{3 \times 10^8}{4 \times 10^{10} \times (200)^{1/4}} \approx 2\,mm$$

As an example of a suitable material for the high resistivity film, mention may be made of $LaMnO_3/ SrTiO_3$.

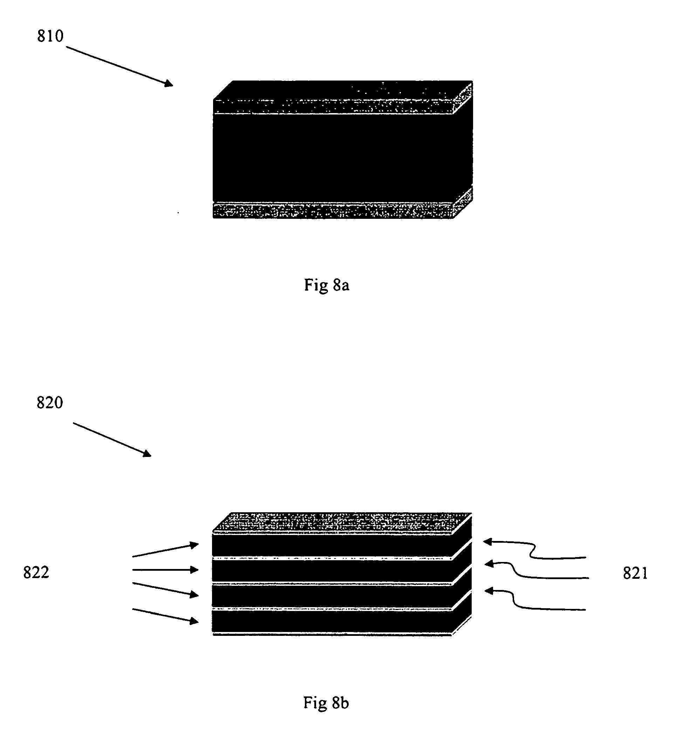

Fig 8b shows a variation 820 of the waveguides shown above: in fig 8a, as background, the slab described above is shown, i.e. a rectangular box-like shape 810 of ferroelectric material, with two electrodes, one each on opposing surfaces of the box. In fig 8b, the waveguide is instead formed as a multilayer structure 820, i.e. it has alternating layers of ferroelectric material and conductors. Thus, in addition to the top and bottom electrodes shown previously, the waveguide 820 alternatingly has intermediate electrodes or electrode layers 821, and intermediate ferroelectric layers 822.

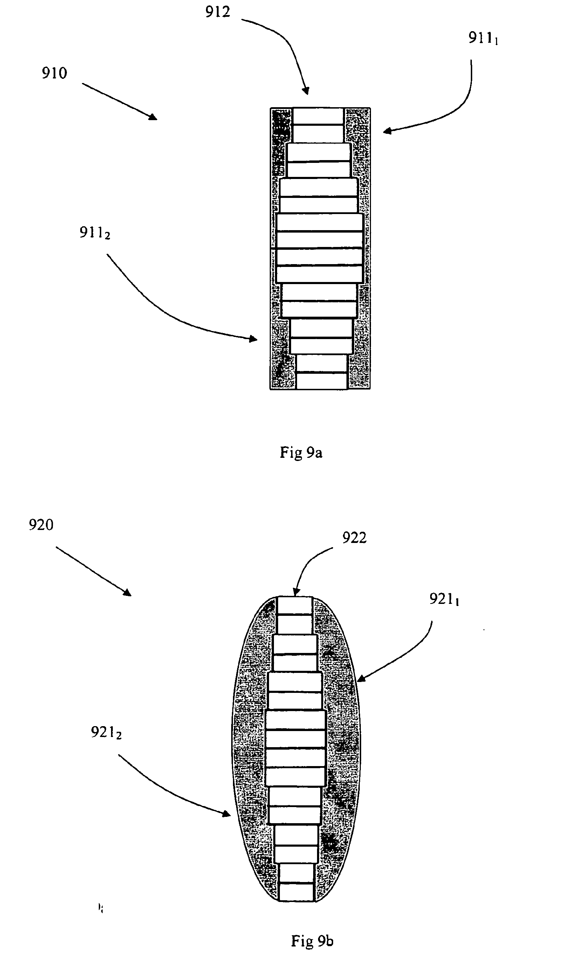

Figs 9a and 9b show versions 910 and 920 of a lens according to the invention seen from the same perspective as in fig 2 above, i.e. a cross sectional view from the side. As shown in figs 9a and 9b, the waveguides of the ferroelectric body 921, 922 can be of different lengths, the dimension l described previously. In addition, figs 9a and 9b show alternative versions 911, 921, of the transformers used with the body of ferroelectric material: since the waveguides of figs 9a and 9b are of different lengths, the main surfaces of the bodies of ferroelectric material are not smooth. However, the transformers 911, 921, are adapted to this, i.e. the ε of the transformer for each waveguide is determined by (1), and the thickness of the transformer for each waveguide is λ/4.

Additionally, the surface of the transformers 911, 921, which is intended to face outwards from the lens 910, 920 is smooth, but in the case of fig 9a, the lens 910 comprises two transformer parts $911_1$, $911_2$, one arranged adjacent

to each main surface of the body of ferroelectric material 912, and which both have a straight outer edge which is arranged to coincide with a main direction of extension of the body 912 of ferroelectric material.

In the case of fig 9b, the lens 920 comprises also two transformer parts $921_1$ $921_2$, one arranged adjacent to each main surface of the body of ferroelectric material 912. However, the outer edge of these transformer parts is convex, giving the resulting lens an essentially oval shape.

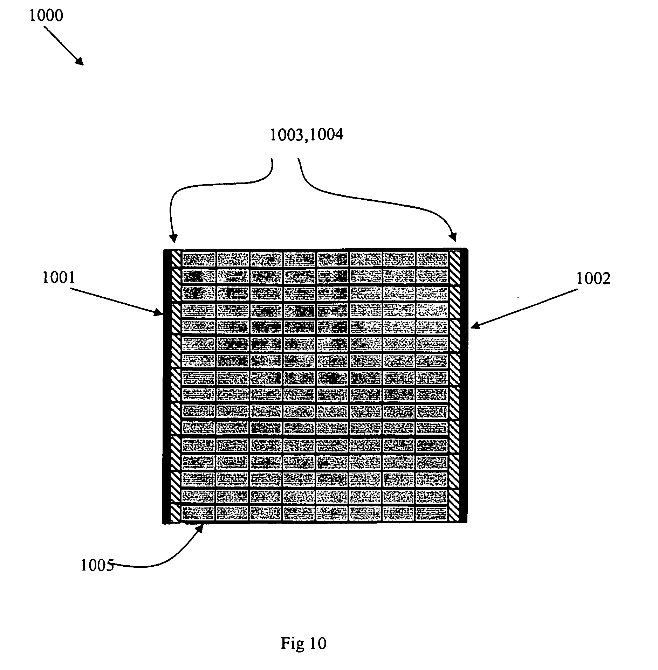

In fig 10, a lens 1000 of the invention is shown in the same perspective as in figs 3 and 5, i.e. a cross sectional view showing one of the main surfaces of the lens, as well as the transformers 1001, 1002. Fig 10 intends to show a practical detail which may be of use when manufacturing a lens of the invention: as described previously, the lens 1000 comprises a plurality of electrodes 1005 and connections between the electrodes and means for creating DC-voltages as shown in, for example, figs 3 and 5. In order to prevent interference and short circuits between the different connections to the DC-voltage, a special isolating layer 1003, 1004, may need to be arranged on one or both sides of the main surface of the ferroelectric body, if that is where the connections between the DC-means and the electrodes are made. Thus, the connections will be "embedded" in the isolating layer 1003, 1004, and isolated from each other. The material for the isolating layer may be chosen from among any of a number of well-known isolating materials.

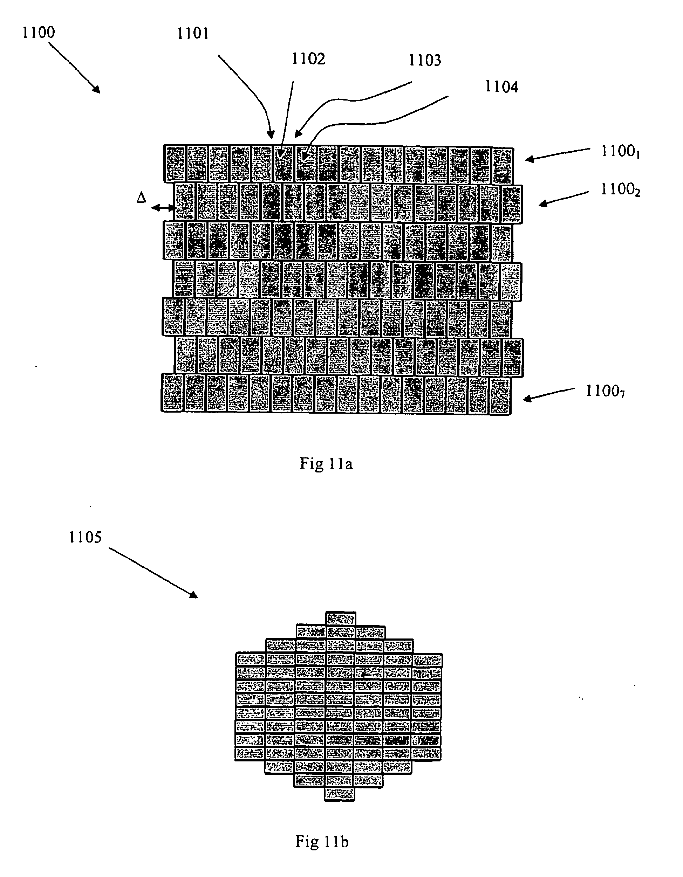

Fig 11a shows another embodiment 1100 of a lens according to the invention, seen in the same perspective as the lens in figs 3, 5 or 10: in the same manner as the lenses described hitherto, the lens 1100 comprises a number of TEM-waveguides made of a ferroelectric body, and arranged so that they together form a body of ferroelectric material. For the sake of clarity, the transformers and DC-means are not shown in fig 11, since they can be the same as those shown previously.

The main difference between the embodiment 1100 and those shown previously is the following: the TEM-waveguides of the lens 1100 are equipped with a first and a second electrode, but not on those sides which will face the waveguides in the rows below and, where applicable, above. Instead, the waveguides of the lens 1100 have a first and a second electrode on those sides which face neighbouring waveguides in the same row.

This is illustrated using two adjacent waveguides 1102 and 1104 in the lens 1100. Thus, the waveguide 1102 has a first 1101 and a second 1103 electrode on each of said sides, and shares the second electrode 1103 with the waveguide 1106 which is immediately adjacent to it on that side.

As can be seen in fig 11a, the waveguides are arranged so that the electrodes of the waveguides in one row do not risk coming into contact with the electrodes of the waveguides in the adjacent rows. Suitably, this is done as shown in fig 11a: the rows $1100_1$-$1100_7$ are alternatingly displaced a distance $\Delta$ with respect to the immediately adjacent rows, so that the electrodes of the waveguides in one row will not risk coming into contact with the electrodes of the waveguides in the surrounding rows.

One benefit of the embodiment of fig 11a is that each waveguide can be addressed individually, as opposed to the previously shown embodiments. Thus, for example, the electrodes 1101 and 1103 will be used to address waveguide 1102, etc. In this embodiment, the DC-biasing network is suitably arranged in the plane of the main surface of the ferroelectric body.

Naturally, an embodiment where each waveguide can b addressed individually will naturally allow for greater flexibility when it comes to shaping the gradient in the ferroelectric body.

Fig 11b shows an alternative embodiment 1105 of the lens shown in fig 11a. The waveguides of fig 11b are similar to those in fig 11a, the main difference is that they are not arranged in rows with equal numbers of waveguides, thus giving the main surface of the ferroelectric body a slightly oval shape.

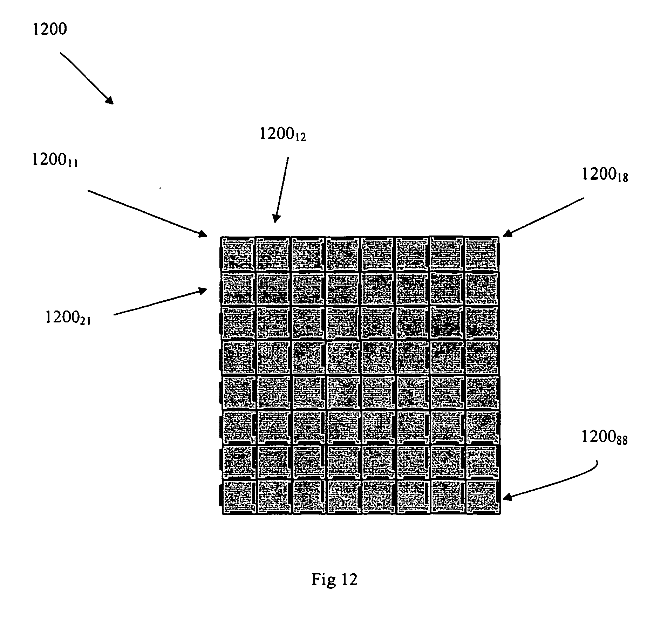

The embodiment shown in fig 11 is one where each waveguide can be addressed individually, but where the gradient(s) can only be created in one direction. Fig 12 shows an embodiment where this is improved upon: in the lens 1200, which is shown in the same perspective as that in fig 11, there is a plurality of waveguides, in this case 64 waveguides, arranged in regular rows and columns to form an a 8*8 matrix. A plurality of these waveguides, in the present example all of them, have a first, a second, a third, and a fourth electrode.

In the example shown, the waveguides are rectangular and box-like, with a basic structure similar to that shown in fig 4. The waveguides used in the lens 1200 have their electrodes arranged so that there is one electrode on each of those sides of the "box" or "slab" which do not contribute in forming either of the main surfaces of the lens 1200. Thus, each waveguide (apart from those situated in the outer rows) will have one electrode in common with one of the other waveguides which surround it on each side.

As an example, consider waveguide $1200_{11}$: this waveguide has four electrodes, one on each of said sides. The waveguide $1200_{11}$ has one electrode on one side in common with the neighbouring waveguide in the "y"-direction, using the same coordinate system as previously, i.e. waveguide $1200_{12}$.

Additionally, waveguide $1200_{11}$ also has one of its electrodes in common with the neighbouring waveguide $1200_{21}$ in the "x"-direction. Since waveguide $1200_{11}$ is arranged in the upper left hand corner of the matrix, and thus has no neighbours in two directions, two of the electrodes will not be shared with any of the other waveguides but the principle will have been realized.

With the embodiment shown in fig 12, each waveguide can thus be addressed individually, and be controlled to have an individual DC-voltage in two directions, which leads to an antenna or lens which can have beam steering in two directions.

As mentioned in conjunction with the embodiments shown in figs 3 and 5, a great advantage of the invention is that the E-field of the incident wave will be essentially parallel to the E-field of the biasing network. With the embodiment of fig 12, even greater flexibility regarding the E-field of the incident electromagnetic wave can be allowed, since the E-field of the biasing network can be controlled with a greater degree of flexibility, thus allowing the E-field of the incident wave to have basically any polarization.

Also, it should be pointed out that the embodiment shown in fig 12, it will be possible to create "local gradients" within the lens, i.e. areas within the lens with different dielectrical constants, $\varepsilon$.

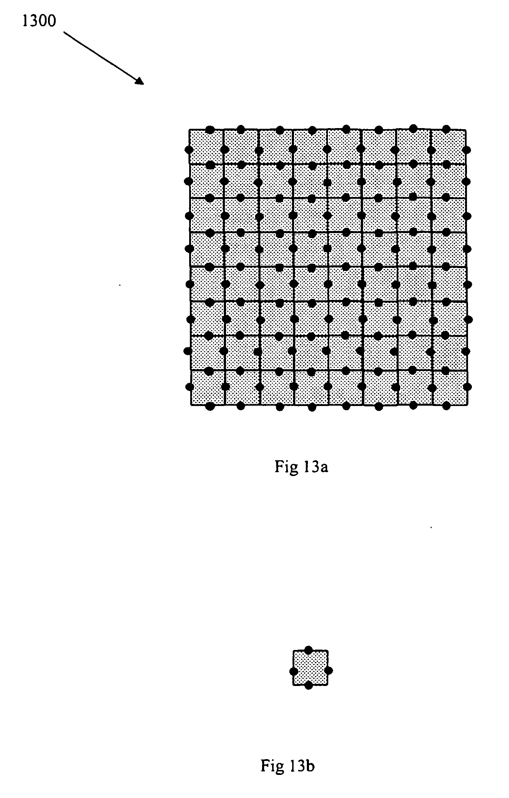

Finally, fig 13a shows the same basic concept as that in fig 12, but also illustrates how the electrodes may be designed: until now, the electrodes have been shown as basically flat. This is one embodiment, but as shown in fig 13a, they may also be circular in their cross-sectional shape.

Fig 13b shows one of the individual waveguides of fig 13a.

The invention is not limited to the examples of embodiments shown above, but may be varied freely within the scope of the appended claims. Thus, the waveguides may be given any number of cross sectional shapes, as is well known in waveguide technology. For example, cross sectional shapes which could be possible are round, oval, hexagonal, etc.

Also, the waveguides of the invention can be used within other applications. For example, the waveguides could be used as phase shifters in hybrid integrated circuits.

## Claims

1. A lens (500) for steering the exit direction ($\Omega$) of an electromagnetic wave (240) which is incident upon the lens, said lens comprising a main body (510) of a ferroelectric material with a first and second main surfaces (507) and at least a first transformer (220, 222) which is adjacent to said first main surface of said ferroelectric body, said electromagnetic wave entering (240) and exiting (250) the lens through said transformer, said lens additionally comprising means (580) for creating a first DC-field in a first direction in the main body, the main body (210, 510) of ferroelectric material comprising a plurality ($510_{11}$-$510_{NN}$) of discrete slabs of the ferroelectric material, each slab in said plurality also comprising a first (603) and a second electrode of an electrically conducting material, the means for creating a DC-field being able to create a gradient DC-field in said first direction using said first and second electrodes in said plurality of slabs, by means of which the dielectric constant in the main body will also be a gradient in said first direction, thus enabling steering of the exiting electromagnetic wave, said first direction being essentially parallel to said first main surface (507) of the main body, the lens being **characterized in that** said slabs additionally comprise at least a third electrode (607) of an electrically conducting material, and second means (590) for using said third electrode to create a second gradient DC-field in a second direction parallel to at least one of said first and second surfaces of the main body, but non-coincidental with the direction of the first DC-field, by means of which the dielectric constant in the main body can be caused to be a gradient in said second direction as well, thus enabling additional steering of the exiting electromagnetic wave in said second direction as well.

2. The lens (200, 300, 500) of claim 1, in which said third electrode (607) is made from a material with a high resistivity.

3. The lens (500) of claim 1 or 2, additionally comprising a second transformer (222), each of the first and second transformers being arranged adjacent to one of the main surfaces of the main body so that said electromagnetic wave will enter the lens through one of said transformers and exit through the other of said transformers.

4. The lens (500) of any of claims 1 - 3, in which the first and second transformers (220, 222) are adapted to facilitate the transition of the incident wave through the main body (510) of ferroelectric material.

5. The lens (500) of any of claims 1-4, in which the slabs ($510_{XX}$) in said plurality of slabs have an elongated box-like shape with essentially the same width (w), height (h) and length (l), and are arranged in rows and columns parallel to each other in the main body, the length of the box thus defining the distance travelled by the electromagnetic wave in the ferroelectric body, and the width and height defining sub-areas of the first (507) and second (508) main surfaces of the main body.

6. The lens of any of claims 1-5, in which the first and second electrodes are arranged on opposing sides of a slab.

7. The lens of any of claims 1-6, in which each slab ($510_{11}$-$510_{NN}$) consists of two smaller slabs (605, 606) arranged adjacently to each other, the third electrode (607) being a layer with high resistivity arranged between the two smaller slabs.

**Patentansprüche**

1. Linse (500) zur Steuerung der Austrittsrichtung ($\Omega$) einer elektromagnetischen Welle (240), die auf die Linse auftrifft, wobei die Linse folgendes umfaßt: einen Hauptkörper (510) aus einem ferroelektrischen Material mit einer ersten und einer zweiten Hauptoberfläche (507) und mindestens einen ersten Transformator (220, 222), der zu der ersten Hauptoberfläche des ferroelektrischen Körpers benachbart ist, wobei die elektromagnetische Welle durch den Transformator in die Linse eintritt (240) und aus dieser austritt (250), wobei die Linse zusätzlich ein Mittel (580) zur Erzeugung eines ersten Gleichspannungsfeldes in einer ersten Richtung im Hauptkörper umfaßt, wobei der Hauptkörper (510) aus ferroelektrischem Material eine Vielzahl ($510_{11}$-$510_{NN}$) von diskreten Platten des ferroelektrischen Materials umfaßt, wobei jede Platte in der Vielzahl außerdem eine erste (603) und eine zweite Elektrode aus einem elektrisch leitenden Material umfaßt, das Mittel zur Erzeugung eines Gleichspannungsfeldes imstande ist, unter Verwendung der ersten und der zweiten Elektroden in der Vielzahl von Platten ein Gradienten-Gleichspannungsfeld in der ersten Richtung zu erzeugen, mittels dessen die Dielektrizitätskonstante im Hauptkörper ebenfalls ein Gradient in der ersten Richtung wird, wodurch eine Steuerung der austretenden elektromagnetischen Welle ermöglicht wird, wobei die erste Richtung im wesentlichen parallel zur ersten Hauptoberfläche (507) des Hauptkörpers ist, wobei die Linse **dadurch gekennzeichnet ist, daß** die Platten zusätzlich folgendes umfassen: mindestens eine dritte Elektrode (607) aus einem elektrisch leitenden Material und ein zweites Mittel (590) zur Verwendung der dritten Elektrode zur Erzeugung eines zweiten Gradienten-Gleichspannungsfeldes in einer zweiten Richtung parallel zu mindestens einer der ersten und der zweiten Oberfläche des Hauptkörpers, aber nicht mit der Richtung des ersten Gleichspannungsfeldes übereinstimmend, mittels dessen bewirkt werden kann, daß die Dielektrizitätskonstante im Hauptkörper auch in der zweiten Richtung ein Gradient ist, wodurch auch eine zusätzliche Steuerung der austretenden elektromagnetischen Welle in der zweiten Richtung ermöglicht wird.

2. Linse (500) nach Anspruch 1, wobei die dritte Elektrode (607) aus einem Material mit einem hohen Widerstand hergestellt ist.

3. Linse (500) nach Anspruch 1 oder 2, zusätzlich einen zweiten Transformator (222) umfassend, wobei der erste und der zweite Transformator jeweils benachbart zu einer der Hauptoberflächen des Hauptkörpers angeordnet sind, so daß die elektromagnetische Welle durch einen der Transformatoren in die Linse eintritt und durch den anderen der Transformatoren austritt.

4. Linse (500) nach einem der Ansprüche 1 bis 3, wobei der erste und der zweite Transformator (220, 222) dafür eingerichtet sind, den Durchtritt der einfallenden Welle durch den Hauptkörper (510) aus ferroelektrischem Material zu erleichtern.

5. Linse (500) nach einem der Ansprüche 1 bis 4, wobei die Platten ($510_{XX}$) in der Vielzahl von Platten eine langgestreckte kastenartige Form mit im wesentlichen der gleichen Breite (w), Höhe (h) und Länge (l) haben und in Zeilen und Spalten parallel zueinander im Hauptkörper angeordnet sind, wobei die Länge des Kastens somit den Weg definiert, den die elektromagnetische Welle im ferroelektrischen Körper zurücklegt, und die Breite und Höhe Teilbereiche der ersten (507) und der zweiten (508) Hauptoberfläche des Hauptkörpers definieren.

6. Linse nach einem der Ansprüche 1 bis 5, wobei die erste und die zweite Elektrode auf gegenüberliegenden Seiten einer Platte angeordnet sind.

7. Linse nach einem der Ansprüche 1 bis 6, wobei jede Platte ($510_{11}$-$510_{NN}$) aus zwei kleineren Platten (605, 606) besteht, die benachbart zueinander angeordnet sind, wobei die dritte Elektrode (607) eine Schicht mit hohem Widerstand ist, die zwischen den beiden kleineren Platten angeordnet ist.

**Revendications**

1. Lentille (500) pour braquer la direction de sortie ($\Omega$) d'une onde électromagnétique (240) qui est incidente sur la lentille, ladite lentille comprenant un corps principal (510) constitué d'un matériau ferroélectrique avec une première et une seconde surfaces principales (507) et au moins un premier transformateur (220, 222) qui est adjacent à ladite première surface principale dudit corps ferroélectrique, ladite onde électromagnétique entrant (240) et sortant (250) de la lentille à travers ledit transformateur, ladite lentille comprenant en outre un moyen (580) pour créer un premier champ CC dans une première direction dans le corps principal, le corps principal (510) de matériau ferroélectrique comprenant une pluralité ($510_{11}$-$510_{NN}$) de plaques discrètes du matériau diélectrique, chaque plaque dans ladite pluralité comprenant également une première (603) et une deuxième électrodes d'un matériau électriquement conducteur, le moyen pour créer un champ CC étant capable de créer un champ CC gradient dans ladite première direction à l'aide de ladite première et de ladite deuxième électrodes dans ladite pluralité de plaques, au moyen desquelles la constante diélectrique dans le corps principal sera également un gradient dans ladite première direction, permettant ainsi de braquer l'onde électromagnétique sortante, ladite première direction étant essentiellement parallèle à ladite première surface principale (507) du corps principal, la lentille étant **caractérisée en ce que** lesdites plaques comprennent en outre au moins une troisième électrode (607) d'un matériau électriquement conducteur, et un second moyen (590) à utiliser avec ladite troisième électrode pour créer un second champ CC gradient dans une seconde direction parallèle à au moins une desdites première et seconde surfaces du corps principal, mais ne coïncidant pas avec la direction du premier champ CC, au moyen de laquelle il est possible d'entraîner que la constante diélectrique dans le corps principal puisse être un gradient dans ladite seconde direction également, permettant ainsi un braquage supplémentaire de l'onde électromagnétique sortante dans ladite seconde direction également.

2. Lentille (500) selon la revendication 1, dans laquelle ladite troisième électrode (607) est constituée d'un matériau ayant une forte résistivité.

3. Lentille (500) selon les revendications 1 ou 2, comprenant en outre un second transformateur (222), chacun du premier et du second transformateur étant arrangé de manière adjacente à une des surfaces principales du corps principal de sorte que ladite onde électromagnétique va entrer dans la lentille à travers un desdits transformateurs et va ressortir à travers l'autre desdits transformateurs.

4. Lentille (500) selon l'une quelconque des revendications 1 à 3, dans laquelle le premier et le second transformateurs (220, 222) sont adaptés pour faciliter la transition de l'onde incidente à travers le corps principal (510) de matériau ferroélectrique.

5. Lentille (500) selon l'une quelconque des revendications 1 à 4, dans laquelle les plaques ($510_{XX}$) dans ladite pluralité de plaques ont une forme de boîte allongée avec essentiellement la même largeur (w), la même hauteur (h) et la même longueur (l), et sont arrangées en rangées et en colonnes parallèles les unes aux autres dans le corps principal, la longueur de la boîte définissant ainsi la distance traversée par l'onde électromagnétique dans le corps ferroélectrique, et la largeur et la hauteur définissant des sous-surfaces de la première (507) et la seconde (508) surfaces principales du corps principal.

6. Lentille selon l'une quelconque des revendications 1 à 5, dans laquelle la première et la deuxième électrodes sont arrangées sur des côtés opposés d'une plaque.

7. Lentille selon l'une quelconque des revendications 1 à 6, dans laquelle chaque plaque ($510_{11}$-$510_{NN}$) est constituée de deux plaques plus petites (605, 606) arrangées de manière adjacente entre elles, la troisième électrode (607) étant une couche avec une résistivité élevée arrangée entre les deux plaques plus petites.

100

110

140

$\Omega$

II-II

DC

$V_N$

II-II

150

**y**

**x**

Fig 1

Fig 2

Fig 3

$210_{xx}$

403

h

w

l

x

y

Fig 4

Fig 5

510xx

603  605  606  607

Fig 6

Fig 7

810

Fig 8a

820

822 821

Fig 8b

912

911₁

910

911₂

Fig 9a

920

922

921₁

921₂

Fig 9b

1000

1003,1004

1001

1002

1005

Fig 10

Fig 11a

Fig 11b

1200

$1200_{12}$

$1200_{11}$

$1200_{18}$

$1200_{21}$

$1200_{88}$

Fig 12

1300

Fig 13a

Fig 13b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0139324 A1

**Non-patent literature cited in the description**

- Voltage-Controlled Ferroelectric Lens Phased Arrays. *IEEE Transactions on Antennas and Propagation,* 1999, vol. 47 (3), 458-468